# EUROPÄISCHE PATENTSCHRIFT

(11) **EP 4 210 913 B1**
(45) Veröffentlichungstag und Bekanntmachung des Hinweises auf die Patenterteilung: **06.11.2024**
(21) Anmeldenummer: 21806137.2
(22) Anmeldetag: 03.09.2021
(51) Int. Cl.: B25J 15/04, B25J 19/00

(54) **SCHICHTMODUL FÜR HANDHABUNGSROBOTERSYSTEM**
LAYER MODULE FOR HANDLING ROBOT SYSTEM
MODULE EN COUCHE POUR SYSTÈME DE ROBOT DE MANUTENTION

(30) Priorität: 10.09.2020 DE 102020005538
(43) Veröffentlichungstag der Anmeldung: 19.07.2023
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2021/000146
(87) Internationale Veröffentlichungsnummer: WO 2022/053090

(56) Entgegenhaltungen:
- WO-A1-2018/187067

## Beschreibung

Die Erfindung betrifft ein Schichtmodul zur Einbindung in ein Handhabungsrobotersystem, mit einem roboterseitigen Schnittstellenufer, mit einem handhabungsseitigen Schnittstellenufer und mit einem dritten Schnittstellenufer, wobei das roboterseitige Schnittstellenufer eine geometrische Anschlusskontur zum lagezentrierten Befestigen an einem Industrieroboter des Handhabungsrobotersystems oder an einem Roboteradapterteil sowie eine Kabelzuführung zur Aufnahme einer Festverdrahtung einer im Schichtmodul angeordneten elektrischen Funktionsbaugruppe mit dem Industrieroboter aufweist, wobei das handhabungsseitige Schnittstellenufer eine geometrische Anschlusskontur zum lagezentrierten lösbaren Fügen mittels einer Schnappverbindung mit einem Handhabungswerkzeug oder mit einem dem Handhabungswerkzeug vorgeschalteten Schichtmodulelement sowie eine Gruppe elektrischer Energiekontakte, Signalkontakte und Datenkontakte aufweist sowie ein Handhabungsrobotersystem mit einem derartigen Schichtmodul und einem mindestens einen Arm aufweisenden Industrieroboter.

Aus der DE 10 2018 008 648 A1 ist ein Schichtmodul in der Bauform eines Kommunikationsmoduls bekannt, das externe Daten an eine im Gehäuse der Greifeinheit angeordnete Elektronik weiterleitet. Die WO 2018/187067 offenbart ein Schichtmodul nach dem Oberbegriff des Anspruchs 1 der vorliegenden Anmeldung.

Der vorliegenden Erfindung liegt die Problemstellung zugrunde, ein Schichtmodul zu entwickeln, das den Einsatz eines Industrieroboters in Verbindung mit unterschiedlichen Handhabungswerkzeugen und für wechselnde Handhabungsaufgaben ermöglicht.

Diese Problemstellung wird mit den Merkmalen des Hauptanspruches gelöst. Dazu ist die elektrische Funktionsbaugruppe handhabungsseitig mit den elektrischen Energiekontakten, Signalkontakten und Datenkontakten elektrisch verbunden. Die elektrische Funktionsbaugruppe umfasst zumindest einen Energiespeicher und das dritte Schnittstellenufer. Das dritte Schnittstellenufer ist Teil einer Bedienerschnittstelle zur temporären Steuerung der über das handhabungsseitige Schnittstellenufer übertragbaren Signale und/oder Daten, wobei das dritte Schnittstellenufer zumindest eine manuell betätigbare Schaltgruppe oder ein Ufer einer manuell füg- und trennbaren Steckerverbindung aufweist.

Im Handhabungsrobotersystem ist das Schichtmodul am Arm des Industrieroboters oder an einem am Arm des Industrieroboters befestigten Roboteradapterteil befestigt und elektrisch mit dem Industrieroboter festverdrahtet verbunden. Am Schichtmodul ist ein Schichtmodulelement mit daran befestigtem Handhabungswerkzeug mittels einer lösbaren Schnappverbindung fixiert oder ein Handhabungswerkzeug ist mittels einer lösbaren Schnappverbindung am Schichtmodul fixiert.

Das Schichtmodul wird als Festteil am Arm eines Industrieroboters befestigt. Elektrisch wird das Schichtmodul mit dem Industrieroboter festverdrahtet verbunden. Die energetische, signalmäßige und datenmäßige Ansteuerung des Handhabungswerkzeugs erfolgt durch die im Schichtmodul angeordnete elektrische Funktionsbaugruppe. Vom Schichtmodul aus ist eine leitungsgebundene Übertragung zur Greifeinheit vorgesehen. Um das Handhabungsrobotersystem problemlos an neue Bearbeitungsaufgaben anzupassen, ist das handhabungsseitige Schnittstellenufer für einen Schnellwechsel ausgebildet. Die handhabungsseitige Schnittstelle ist mechanisch hierfür als lösbare Schnappverbindung ausgebildet. Die elektrische Verbindung erfolgt z.B. mittels fester Kontakte an einem Schnittstellenufer und federnder Kontaktstifte am anderen Schnittstellenufer. Beim Wechsel des an das Schichtmodul angeschlossenem Handhabungswerkzeugs oder des Werkstücks kann die Programmierung im Schichtmodul werkzeugspezifisch und werkstückspezifisch erfolgen. Dies kann bereits während der Hauptzeit eines vorhergehenden Arbeitsganges erfolgen.

Weitere Einzelheiten der Erfindung ergeben sich aus den Unteransprüchen und der nachfolgenden Beschreibung schematisch dargestellter Ausführungsformen.
- Figur 1:: Schichtmodul mit roboterseitigem Schnittstellenufer;
- Figur 2:: Schichtmodul mit handhabungsseitigem Schnittstellenufer;
- Figur 3:: Grundkörper des Schichtmoduls;
- Figur 4:: Einsatzstück;
- Figur 5:: Schnitt des Schichtmoduls;
- Figur 6:: Querschnitt zu Figur 5;
- Figur 7:: Schichtmodulelement;
- Figur 8:: Blockbild einer ersten Variante der elektrischen Funktionsbaugruppe;
- Figur 9:: Blockbild einer zweiten Variante der elektrischen Funktionsbaugruppe;
- Figur 10:: Blockbild der Variante aus Figur 9 mit erweitertem Funktionsumfang;
- Figur 11:: Blockbild der Variante aus Figur 10 mit Lernmodul;
- Figur 12:: Blockbild der Variante aus Figur 10 mit Sicherheitsmodul;
- Figur 13:: Handhabungsrobotersystem.

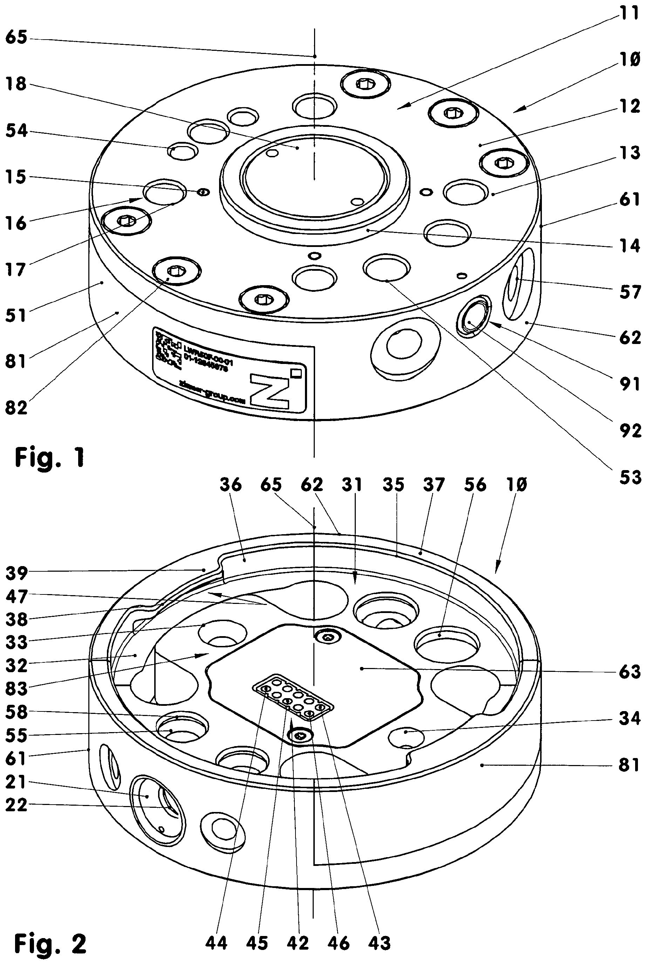

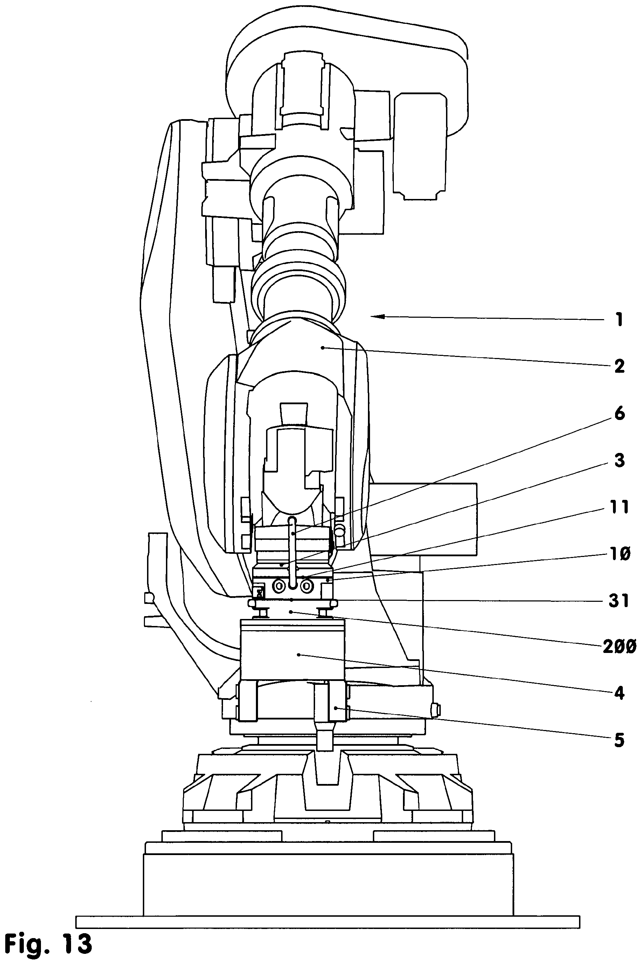

Die Figuren 1 - 6 zeigen ein Schichtmodul (10) und einige seiner Einzelteile. Das Schichtmodul (10) wird in Handhabungsrobotersystemen (1), vgl. Figur 13, eingesetzt. Das einzelne Handhabungsrobotersystem (1) umfasst einen Industrieroboter (2), der beispielsweise als 6-Achs-Roboter in der Bauform eines Vertikal-Gelenkarm-Roboters ausgebildet ist und ein am Industrieroboter (2) angeschlossenes Handhabungswerkzeug (4). Auch ein anderer Aufbau des Industrieroboters (2), z.B. in der Bauform eines Portalroboters, eines Standsäulenroboters, eines Polarroboters, eines SCARA-Roboters, etc. ist denkbar.

Das Schichtmodul (10) wird an einem Arm (3) des Roboters (2) zwischen einem Gelenk des Roboters (2) und dem beispielsweise mindestens einem Handhabungswerkzeug (4) eingesetzt. Das Handhabungswerkzeug (4) ist z.B. eine Greifeinheit (4). Die Greifeinheit (4) kann z.B. mit steifen Wirkorganen (5), mit flexiblen Wirkorganen, mit magnetischen Wirkorganen, etc. ausgebildet sein. Sie kann elektrisch, pneumatisch oder hydraulisch betätigt sein. Eine Greifeinheit (4) mit steifen Wirkorganen (5) ist beispielsweise ein Parallelgreifer mit linear verstellbaren Greifbacken (5), eine Greifeinheit mit schwenkbaren Greifbacken (5), ein Zangengreifer, etc. Als Greifeinheit mit flexiblen Wirkorganen kann beispielsweise ein Vakuumgreifer, ein Balgengreifer, etc. eingesetzt werden. Bei allen Greifeinheiten (4) erfolgt die Medienversorgung für den Antrieb vom Industrieroboter (2) aus über das Schichtmodul (10) zur Greifeinheit (4).

Beim Betrieb des Handhabungsrobotersystems (1) erfolgt die Positionierung des Handhabungswerkzeugs (4) an der Aufnahmeposition und an der Ablageposition mittels der Roboterachsen. Das Greifen und das Lösen des Werkstücks erfolgt dann mittels des Handhabungswerkzeugs (4). Das Verfahren z.B. der Greifbacken (5) relativ zum Werkstück erfolgt hierbei werkstückspezifisch.

Das Schichtmodul (10) ist zylinderscheibenförmig ausgebildet. Es hat ein roboterseitiges Schnittstellenufer (11) und ein handhabungsseitiges Schnittstellenufer (31). Das roboterseitige Schnittstellenufer (11) und das handhabungsseitige Schnittstellenufer (31) bilden einander abgewandte Stirnseiten (12; 32) des Schichtmoduls (10). Im Ausführungsbeispiel beträgt der Durchmesser des Schichtmoduls (10) 75 Millimeter und seine Höhe 24 Millimeter.

Die Figur 1 zeigt eine isometrische Darstellung des Schichtmoduls (10) mit dem roboterseitigen Schnittstellenufer (11). Mit diesem ist das Schichtmodul (10) z.B. direkt am Roboter befestigbar. Es ist aber auch denkbar, zwischen dem Schichtmodul (10) und dem Roboterarm ein Roboteradapterteil, z.B. eine Adapterplatte, anzuordnen. Zur lagezentrierten Befestigung am Arm des Roboters oder am Roboteradapterteil hat das roboterseitige Schnittstellenufer (11) eine geometrische Anschlusskontur (13). Diese umfasst im Ausführungsbeispiel einen Zentrierring (14) und mindestens eine außermittig angeordnete Zentrierbolzenaufnahme (15). Es ist auch denkbar, z.B. eine einzelne beispielsweise rechteckig ausgebildete Zentrierbolzenaufnahme für die Lagebestimmung und die Verdrehsicherung des Schichtmoduls (10) am roboterseitigen Schnittstellenufer (11) einzusetzen. Weiterhin umfasst die geometrische Anschlusskontur (13) im Ausführungsbeispiel ein Bohrbild (16) mit z.B. vier auf einem gemeinsamen Teilkreis angeordneten Durchgangsbohrungen (17). Diese Durchgangsbohrungen (17) können als angesenkte Bohrungen ausgebildet sein. In diese Durchgangsbohrungen (17) werden beispielsweise Befestigungsschrauben zum Befestigen des Schichtmoduls (10) am Roboteradapterteil oder direkt am Roboterarm eingesetzt. Auch eine andere Ausbildung der Befestigung des Schichtmoduls (10) am Roboteradapterteil oder am Roboterarm ist denkbar.

Beispielsweise mittig hat das roboterseitige Schnittstellenufer (11) in den Darstellungen der Figuren 1, 5 und 6 einen abnehmbaren Veschlussdeckel (18). Dieser Verschlussdeckel (18) verschließt in diesen Darstellungen eine stirnseitige Kabelzuführung (19). Durch diese z.B. eine Energie-, Signal- und Datenleitungszuführung (19) bildende Kabelzuführung (19) hindurch ist beispielsweise ein Kabelbündel (6) vom Industrieroboter (2) zum Schichtmodul (10) führbar. Mittels dieses Kabelbündels wird das Schichtmodul (10) relativ zum Roboterarm festverdrahtet. Eine weitere Kabelzuführung (21) ist an der Mantelfläche (51) des Schichtmoduls (10) vorgesehen.

Auch diese z.B. als Energie-, Signal- und Datenleitungszuführung (21) ausgebildete weitere Kabelzuführung (21) kann verschließbar ausgebildet sein. Diese weitere Kabelzuführung (21) kann alternativ zur erstgenannten Kabelzuführung (19) für die Führung der elektrischen Verbindung (6) vom Industrieroboter in den Innenraum (52) des Schichtmoduls (10) eingesetzt werden. Die Mantelfläche (51) bildet in diesem Fall einen Teil des roboterseitigen Schnittstellenufers (21) des Schichtmoduls (10). Es ist auch denkbar, nur die Energieleitungen zwischen dem Industrieroboter (2) und einer elektrischen Funktionsbaugruppe (100) des Schichtmoduls (10) durch den Kabelkanal (19; 21) zu führen. Der Signalaustausch und/oder der Datenaustausch erfolgen dann z.B. drahtlos.

Das dargestellte Schichtmodul (10) hat weiterhin zwei Gruppen mit jeweils zwei Medienanschlüssen (53, 54). Dies Medienanschlüsse (53, 54) setzen sich in Medienleitungen (55, 56) fort, die das Schichtmodul (10) parallel zu seiner Längsachse (65) durchdringen. Die beiden Gruppen von Medienleitungen (55, 56) haben unterschiedliche Durchmesser. Im Ausführungsbeispiel beträgt der Durchmesser der engeren Medienleitungen (55) 60 % des Durchmessers der weiteren Medienleitungen (56). Jede der Medienleitungen (55, 56) hat zusätzlich einen radial orientierten Anschluss (57), der in der Mantelfläche (51) mündet.

An der Mantelfläche (51) ist weiterhin ein Schalter (92) angeordnet. Dieser ist als manuell betätigbarer Taster ausgebildet. Dieser Schalter (92) ist Teil einer Bedienerschnittstelle (91) des Schichtmoduls (10).

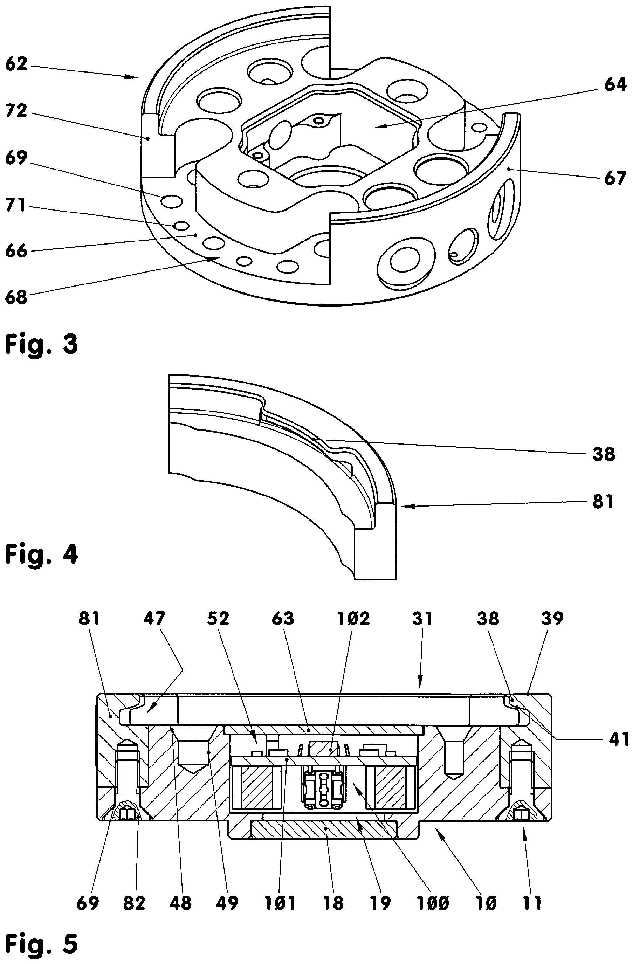

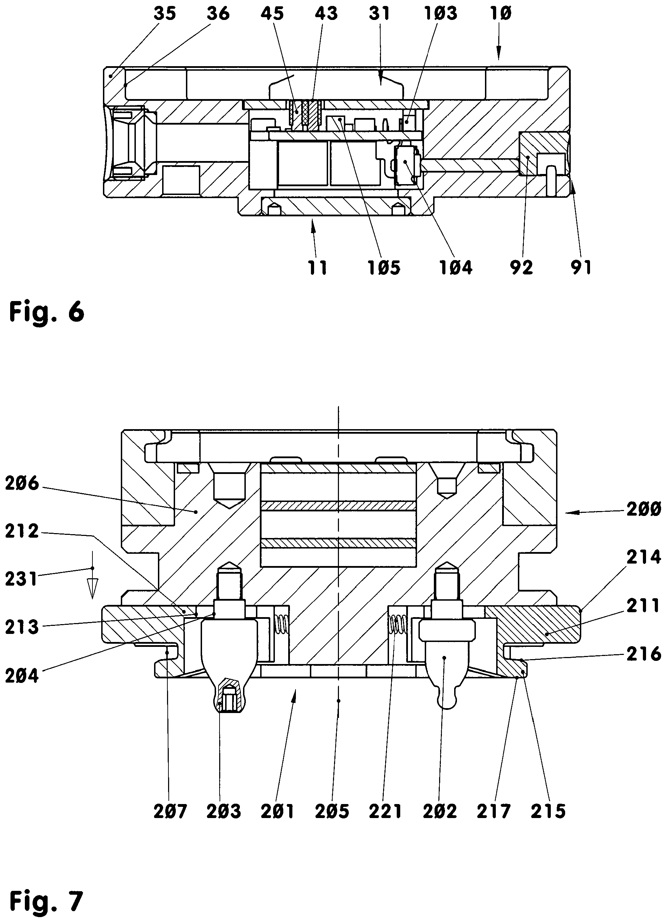

Die Figur 2 zeigt eine isometrische Darstellung des Schichtmoduls (10) mit dem handhabungsseitigen Schnittstellenufer (31). An diesem handhabungsseitigen Schnittstellenufer (31) ist ein Schichtmodulelement (200), vgl. Figur 7, oder ein Handhabungswerkzeug (4) lösbar fixierbar. Das handhabungsseitige Schnittstellenufer (31) hat im Ausführungsbeispiel als Teile einer geometrischen Anschlusskontur (83) zwei außermittig angeordnete Führungselementaufnahmen (33, 34). Diese Führungselementaufnahmen (33, 34) haben beispielsweise eine unterschiedliche Tiefe. Sie sind parallel zur Längsachse (65) orientiert. Die Führungselementaufnahmen (33, 34) haben unterschiedliche Querschnitte. In den Darstellungen der Figuren 2 und 5 hat die links dargestellte Führungselementaufnahme (33) eine größere Querschnittsfläche als die rechts dargestellte Führungselementaufnahme (34).

Das Schichtmodul (10) ist am handhabungsseitigen Schnittstellenufer (31) im Ausführungsbeispiel schalenförmig ausgebildet. Es hat einen freistehenden umlaufenden Rand (35) konstanter Höhe. Die Innenwandung (36) des Randes (35) bildet einen Radialzentrierring (36). Die Stirnfläche (37) des Randes (35) liegt beispielsweise in einer Normalenebene zur Längsachse (65). Zwei einander gegenüberliegende Randabschnitte sind als Umgriffsränder (38) ausgebildet. Im Ausführungsbeispiel überdecken die Umgriffsränder (38) jeweils einen Sektor von 36 Grad. Diese Umgriffsränder (38) sind nach innen orientiert. Im Querschnitt sind die Umgriffsränder (38) keilförmig ausgebildet. Ihre Oberseite (39) und seine Unterseite (41) schließen im Ausführungsbeispiel einen Winkel von 5 Grad ein. Die Scheitellinie dieses Winkels ist in Richtung der Längsachse (65) orientiert.

Versetzt zur Längsachse (65) ist am handhabungsseitigen Schnittstellenufer (31) eine Gruppe elektrischer Kontakte (42) angeordnet. Im Ausführungsbeispiel umfasst die Gruppe elektrischer Kontakte (42) zehn Kontakte mit stirnseitigen Kontaktflächen (43). Dies sind elektrischer Energiekontakte (44), Signalkontakte (45) und Datenkontakte (46). Diese Kontakte (44 - 46) sind beispielsweise in zwei Reihen angeordnet. In der Darstellung der Figur 2 liegen die Kontaktflächen (43) in einer gemeinsamen, relativ zum Gehäuse (61) des Schichtmoduls (10) festen Ebene normal zur Längsachse (65). Anstatt starr können die elektrischen Kontakte (44 - 46) einzeln oder als Gruppe federbelastet ausgebildet sein.

Die Medienleitungen (55, 56) haben am handhabungsseitigen Schnittstellenufer (31) jeweils ein Dichtelement (58), z.B. einen O-Ring.

Das Gehäuse (61) des Schichtmoduls (10) hat einen Grundkörper (62), vgl. Figur 3 und zwei in diesen eingesetzte Einsatzstücke (81), vgl. Figur 4. Ein am handhabungsseitigen Schnittstellenufer (31) angeordneter Deckel (63) verschließt einen Zentralbereich (64) des Schichtmoduls (10).

Der Grundkörper (62) hat einen Boden (66) und zwei außenliegende Wandbereiche (67). Zwischen den Wandbereichen (67) sind Einsenkungen (68) zur Aufnahme der Einsatzstücke (81) ausgebildet. Im Ausführungsbeispiel haben die beiden Einsenkungen (68) die gleiche Größe. Den Boden (66) durchdringen außer den Durchgangsbohrungen (17) zwei Gruppen von jeweils drei Senkbohrungen (69). Diese Senkbohrungen (69) münden in Aufsetzflächen der Einsenkungen (68). Zwischen den Senkbohrungen (69) sind Zentrierbohrungen (71) eingebracht.

Die beiden Einsenkungen (68) überdecken jeweils einen Sektorenwinkel von 90 Grad. Die Begrenzungsflächen (72) der Einsenkungen (68) sind beispielsweise radial zur Längsachse (65) orientiert.

Der Grundkörper (62) ist im Ausführungsbeispiel aus Aluminium hergestellt. Der Elastizitätsmodul dieses Werkstoffs beträgt beispielsweise 70000 Newton pro Quadratmillimeter.

Die beiden Einsatzstücke (81) sind im Ausführungsbeispiel identisch zueinander ausgebildet. Sie haben eine schalenabschnittsförmige Gestalt. Im oberen Bereich sind an den Einsatzstücken (81) die Umgriffsränder (38) ausgebildet.

Die Einsatzstücke (81) sind beispielsweise aus Stahl hergestellt. Der Elastizitätsmodul dieses Werkstoffs beträgt 210.000 Newton pro Quadratmillimeter. Dieser Elastizitätsmodul beträgt damit das Dreifache des Elastizitätsmoduls des Grundkörpers (62). Die Werkstoffe können so gewählt sein, dass der Elastizitätsmodul der Einsatzstücke (81) mehr als das Doppelte des Elastizitätsmoduls des Grundkörpers (62) beträgt. Es ist auch denkbar, die Einsatzstücke (81) als Austauschteile einzusetzen. Hierfür können sie beispielsweise aus einem Kunststoff hergestellt sein.

Beim Zusammenbau des Schichtmoduls (10) wird jedes der Einsatzstücke (81) in eine Einsenkung (68) eingesetzt. Zentrierbolzen und in die Senkbohrungen (69) eingesetzte Befestigungsschrauben (82) halten und sichern die Einsatzstücke (81). In den Zentralbereich (64) des Grundkörpers (62) wird die elektrische Funktionsbaugruppe (100) eingesetzt. Dieser Zentralbereich (64) wird anschließend beispielsweise mittels des Deckels (63) verschlossen.

Die Figuren 5 und 6 zeigen zueinander orthogonale Schnittdarstellungen des Schichtmoduls (10). In diesen Darstellungen ist jeweils das roboterseitige Schnittstellenufer (11) unten und das handhabungsseitige Schnittstellenufer (31) oben dargestellt.

Die beiden Umgriffsränder (38) begrenzen jeweils eine Schnappelementaufnahme (47). Die beiden Schnappelementaufnahmen (47) sind spiegelbildlich zueinander ausgebildet. Sie liegen einander gegenüber.

Die beiden Führungselementaufnahmen (33, 34) haben jeweils eine Einlaufschräge (48) und einen zylindrischen Aufnahmebereich (49). Hierbei ist beispielsweise der zylindrische Aufnahmebereich (49) der Führungselementaufnahme (34) kleineren Durchmessers länger als der zylindrische Aufnahmebereich der Führungselementaufnahme (33) größeren Durchmessers.

Zwischen den beiden Führungselementaufnahmen (33, 34) ist im Innenraum (52) des Schichtmoduls (10) die elektrische Funktionsbaugruppe (100) angeordnet. Diese umfasst beispielsweise eine Platine (101), auf der zumindest ein Energiespeicher (102), ein Funkmodul (103) und ein Schaltelement (104) angeordnet sind.

Der Energiespeicher (102) wird beispielsweise durch einen in einem Gleichstromkreis eingesetzten Kondensator gebildet. Bei hohen Beschleunigungen des Handhabungswerkzeugs kann mittels dieses Energiespeichers (102) den Antriebsmotoren des Handhabungswerkzeugs (4) zusätzliche Energie zur Verfügung gestellt werden. Damit können z.B. Rückwirkungen von Verbrauchsspitzen auf den Industrieroboter (2) reduziert werden.

Das Funkmodul (103) hat beispielsweise einen Sender und einen Empfänger. Sowohl der Sender als auch der Empfänger sind beispielsweise für eine Frequenz im Bereich von 2,4 Gigahertz ausgelegt. Hierbei können sich die jeweiligen Frequenzen in diesem Bereich an die Frequenz der Gegenstation anpassen. Die an das Funkmodul (103) angelegte Spannung beträgt beispielsweise 3,1 bis 4,2 Volt. Das bidirektionale Funkmodul ist beispielsweise asynchron seriell ausgebildet, z.B. als UART, Bluetooth, WLAN, etc.

An der Platine (101) ist weiterhin das Schaltelement (104) angeordnet. Dieses ist mittels des von der Mantelfläche (51) des Schichtmoduls (10) betätigbaren Tasters (92) schaltbar. Im Ausführungsbeispiel bildet der Taster (92) zusammen mit dem Schaltelement (104) eine Schaltgruppe (92, 104) in der Bauform eines Multifunktionstasters (92, 104). Ein mehrmaliges Betätigen des Tasters (92) schaltet beispielsweise die elektrische Funktionsbaugruppe (100) zwischen unterschiedlichen Betriebsarten um.

Die Platine (101) ist mittels der kanalartigen Energie- Signal- und Datenzuführung (19, 21) sowohl mit der Mantelfläche (51) als auch mit der roboterseitigen Stirnseite (12) verbunden.

Nach dem Einsetzten der elektrischen Funktionsbaugruppe (100) in den Innenraum (52) des Schichtmoduls (10) wird beispielsweise der Taster (92) montiert, sodass er z.B. am Schaltelement (104) anliegt. Gegebenenfalls kann zwischen dem Schalter (92) und dem Schaltelement (104) ein Zwischenstößel eingesetzt werden. Auch eine andere Reihenfolge des Zusammenbaus des Schichtmoduls (10) ist denkbar.

Bei der Montage am Arm (3) des Industrieroboters wird das Schichtmodul (10) mit dem roboterseitigen Schnittstellenufer (11) am Arm (3) des Industrieroboters (2) zentriert und mittels in den Durchgangsbohrungen (17) eingesetzter Schrauben befestigt. Ein z.B. seitlich oder zentral aus dem Arm des Industrieroboters herausgeführtes elektrisches Kabel (6) oder ein Kabelverbund wird durch eine Zugentlastung (22) der Energie-, Signal- und Datenzuführung (19; 21) hindurchgeführt und an einem Anschlussblock (105) der Platine (101) befestigt. Es ist auch denkbar, das Kabel (6) für die Energie-, Signal- und Datenübertragung aus dem Schichtmodul (10) herauszuführen und am Industrieroboter (2) zu befestigen. Auch der Einsatz eines separaten Kabels (6) oder Kabelbündels, das sowohl am Industrieroboter (2) als auch im Schichtmodul (10) befestigt wird, ist denkbar.

Das am Industrieroboter (2) befestigte und mit diesem festverdrahtete Schichtmodul (10) hat zunächst ein freies handhabungsseitiges Schnittstellenufer (31). Dieses handhabungsseitige Schnittstellenufer (31) umfasst eine geometrische Anschlusskontur (83) zum lagezentrierten lösbaren Fügen mit einem Handhabungswerkzeug (4) oder mit einem dem Handhabungswerkzeug (4) vorgeschalteten Schichtmodulelement (200). Außerdem umfasst es eine Gruppe (42) elektrischer Energiekontakte (44), Signalkontakte (45) und Datenkontakte (46). Weiterhin sind im Ausführungsbeispiel an diesem handhabungsseitigen Schnittstellenufer (31) Medienleitungen (55, 56) in der Bauform pneumatischer Leitungen vorgesehen.

An dieses handhabungsseitige Schnittstellenufer (31) wird beispielsweise das in der Figur 7 dargestellte Schichtmodulelement (200) angeschlossen, vgl. Figur 13. Das Schichtmodulelement (200) hat eine zum handhabungsseitigen Schnittstellenufer (31) des Schichtmoduls (10) komplementäre Schnittstellenuferseite (201). Diese hat im Ausführungsbeispiel zwei Führungselemente (202, 203) unterschiedlichen Querschnitts. Der Abstand der beiden Führungselemente (202, 203) zueinander und das Verhältnis ihrer Durchmesser entspricht den jeweiligen Maßen der Führungselementaufnahmen (33, 34). Auch der Anschluss eines Handhabungswerkzeugs (4) an das handhabungsseitige Schnittstellenufer (31) ist denkbar.

Das Schichtmodulelement (200) hat weiterhin zwei einander gegenüberliegende, in radiale Richtung verschiebbare Verriegelungsteile (211, 212). Im Ausführungsbeispiel sind beide Verriegelungsteile (211, 212) identisch zueinander ausgebildet. Das einzelne Verriegelungsteil (211; 212) hat ein zentrales Führungslangloch (213) zur Aufnahme eines Führungsbundes (204) jeweils eines Führungselements (202, 203). Es begrenzt zusammen mit dem jeweiligen Führungselement (202; 203) den Hub des Verriegelungsteils (211; 212) in radialer Richtung. Das Führungslangloch (213) ist radial zur Längsachse (205) des Schichtmodulelements (200) orientiert. Diese Längsachse (205) des Schichtmodulelements (200) fluchtet bei angeschlossenem Schichtmodulelement (200) mit der Längsachse (65) des Schichtmoduls (10).

An seiner Außenseite hat das einzelne Verriegelungsteil (211; 212) einen Griffbereich (214). Unterhalb des Griffbereichs (214) und zu diesem beabstandet ist in der Darstellung der Figur 7 ein auskragender Haken (215) angeordnet. Der Griffbereich (214) steht hierbei um 30 % der in radialer Richtung gemessenen Bauteillänge über den Haken (215) heraus. Der Keilwinkel zwischen der Hakenoberseite (216) und der Hakenunterseite (217) beträgt im Ausführungsbeispiel 5 Grad. Dies ist auch die Größe des Winkels, den die Hakenoberseite (216) mit einer Normalenebene zur Längsachse (205) einschließt. Zwischen den Verriegelungsteilen (211; 212) und dem Körper (206) des Schichtelementmoduls (200) sind jeweils Federelemente (221) angeordnet. Diese belasten die Verriegelungsteile (211, 212) relativ zum Körper (206) radial nach außen. Die beiden Verriegelungsteile (211, 212) sind beispielsweise aus dem gleichen Werkstoff hergestellt wie die Einsatzstücke (81). Auch ein anderer Aufbau der Verriegelungsteile (211, 212) ist denkbar. Beispielsweise kann das Schichtmodulelement (200) mit einem einzigen Betätigungselement ausgebildet sein, das alle Verriegelungsteile (211, 212) steuert.

Die Schnittstellenuferseite (201) des Schichtmodulelements (200) hat weiterhin eine - hier nicht dargestellte - Gruppe elektrischer Kontaktstifte. Diese ragen federbelastet aus der Schnittstellenuferseite (201) heraus. Die Anordnung der Gruppe der Kontaktstifte entspricht der Anordnung der Gruppe (42) elektrischer Kontakte des handhabungsseitigen Schnittstellenufers (31) des Schichtmoduls (10). Beispielsweise ist jedem Kontakt (44 - 46) des Schichtmoduls (10) ein Kontaktstift des Schichtmodulelements (200) zugeordnet. Bei mit dem Schichtmodul (10) verbundenen Schichtmodulelement (200) kontaktieren die Kontaktstifte mit ihren Stirnflächen die schichtmodulseitigen Kontakte (44 - 46). Die Kontakte (44 - 46) und Kontaktstifte können auch die Bauart eines Steckers oder mehrerer Stecker und einer Buchse oder mehrerer Buchsen haben.

Das Schichtmodulelement (200) kann z.B. durchgehende pneumatische Leitungen haben. Diese sind beispielsweise parallel zur Längsachse (205) orientiert.

Beim Anschließen des Schichtmodulelements (200) oder des Handhabungswerkzeugs (4) an das Schichtmodul (10) werden die Verriegelungsteile z.B. manuell oder mittels einer Vorrichtung entgegen der Kräfte der Federelemente (221) belastet. Die Verriegelungsteile (211, 212) werden relativ zum Körper (206) radial zur Längsachse (205) hin verschoben, bis der Umkreis der Haken (215) kleiner ist als der Innkreis der Umgriffsränder (38). Das Schichtmodulelement (200) wird auf das Schichtmodul (10) aufgesetzt. Hierbei werden die Führungselemente (202, 203) in die Führungselementaufnahmen (33, 34) eingesetzt. Damit wird die Lage des Schichtmodulelements (200) relativ zum Schichtmodul (10) festgelegt. Beim weiterer Annäherung der beiden Kopplungspartner (10, 200) in der in Richtung der Längsachsen (65, 205) orientierten Fügerichtung (231) umgreift der Radialzentrierring (36) des Schichtmoduls (10) den Ringbund (207) des Schichtelementmoduls (200). Die Kontaktstifte kontaktieren die elektrischen Kontakte (44 - 46) des Schichtmoduls (10). Hierbei werden die Federelemente der Kontaktstifte belastet, sodass die Anpresskraft der Kontaktstifte an die Kontakte (44 - 46) gesichert wird. Außerdem können die Medienleitungen für die flüssigen und/oder gasförmigen Medien z.B. mittels Aneinanderstecken verbunden werden.

Sobald der Rand (35) des Schichtmoduls (10) am Schichtelementmodul (200) anliegt, werden z.B. die Griffbereiche (214) entlastet. Die Verrieglungsteile (211, 212) werden mittels der Federelemente (221) radial nach außen verschoben. Die Haken (215) hintergreifen die Umgriffsränder (38). Hierbei gleiten die Oberseiten (216) der Haken (215) entlang der Unterseiten (41) der Umgriffsränder (38). Durch dieses federnde Einspreizen werden die beiden Koppelpartner (10, 200) form- und kraftschlüssig miteinander gefügt. Die Schnappverbindung zwischen dem Schichtmodul (10) und dem Schichtmodulelement (200) oder einem Handhabungswerkzeug (4) ist damit selbstsichernd.

Zum Lösen der Fügeverbindung werden die Verriegelungsteile (211, 212) mittels des Griffbereichs (214) oder der Griffbereiche (214) unter Belastung der Federelemente (221) radial nach innen verschoben. Die Schnappverbindung wird gelöst. Beispielsweise kann das Schichtmodulelement (200) nun entgegen der Fügerichtung (231) vom Schichtmodul (10) abgehoben werden.

Die beiden komplementär zueinander ausgebildeten, miteinander koppelbaren Schnittstellenufer (31, 201) des Schichtmoduls (10) und des Schichtmodulelements (200) oder des Handhabungswerkzeugs (4) können auch anders ausgebildet sein. Beispielsweise können einzelne Teile der mechanischen Adaptergeometrie (83; 202, 203, 207, 211, 212), der elektrischen Kontaktstellen oder der Medienverbindung am jeweils anderen Schnittstellenufer (201; 31) angeordnet sein. Beispielsweise können dann die elektrischen Energiekontakte (44), Signalkontakte (45) und Datenkontakte (46) des Schichtmoduls (10) federbelastet ausgebildet sein.

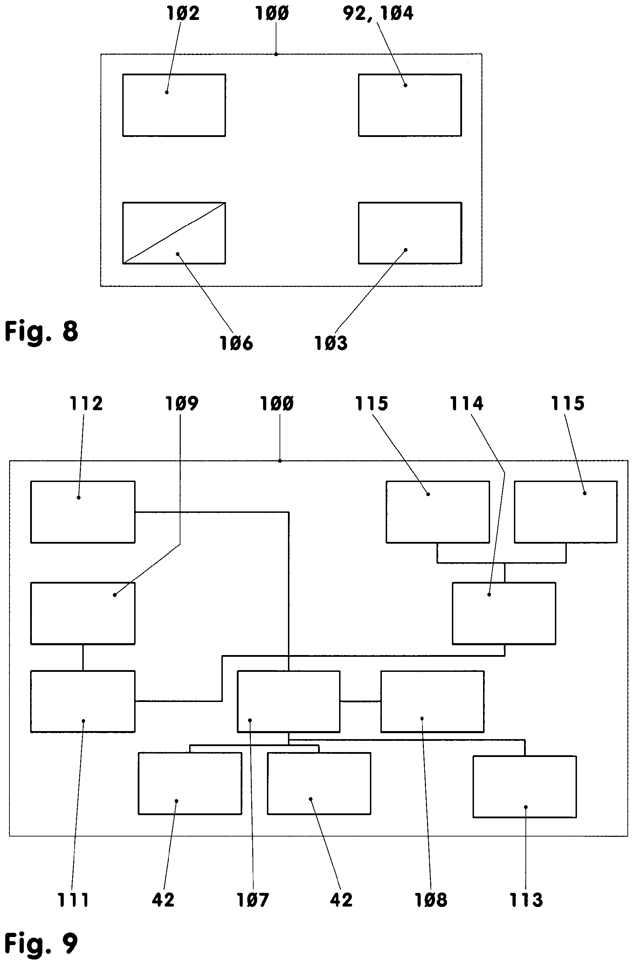

Die Figur 8 zeigt ein Blockschaltbild einer ersten Variante der elektrischen Funktionsbaugruppe (100) des Schichtmoduls (10). Das Funkmodul (103) ist beispielsweise zum Datenaustausch mit einem mobilen oder stationären Endgerät ausgebildet. Über das dritte Schnittstellenufer (91), das ein bedienerseitiges Schnittstellenufer (91) bildet, können beispielsweise Signale oder Daten des Handhabungswerkzeugs (4) ausgelesen werden oder z.B. zusätzliche Steuerdaten für das Handhabungswerkzeug (4) eingegeben werden. Der Energiespeicher (102) bildet in diesem Ausführungsbeispiel einen Pufferspeicher, wie oben beschrieben.

Weiterhin verfügt die elektrische Funktionsbaugruppe (100) in diesem Ausführungsbeispiel über einen NPN-PNP-Logik-Umwandler (106). Damit kann die elektrische Funktionsbaugruppe (100) mit beiden derzeit gängigen Logiksystemen eines Industrieroboters (2) kommunizieren. Die Umschaltung kann beispielsweise mittels des Multifunktionstasters (92, 104) erfolgen. Dieser Multifunktionstaster (92, 104) dient beispielsweise auch zur Freigabe des Industrieroboters (2). Der Industrieroboter (2) kann z.B. als Leichtbauroboter ausgebildet sein.

In der Figur 9 ist ein Blockschaltbild einer weiteren Variante der elektrischen Funktionsbaugruppe (100) dargestellt. Diese Funktionsbaugruppe (100) umfasst einen Anwendungsrechner (107) und eine Datenspeichereinheit (108). Die Funktionsbaugruppe (100) hat eine Stromversorgungsgruppe (109). In dieser wird beispielsweise die vom Industrieroboter (2) kommende Energie in die Anschlussdaten des Handhabungswerkzeugs (4) und des Anwendungsrechners (107) umgesetzt. Die im Handhabungswerkzeug (4) erforderliche Spannung ist beispielsweise eine Gleichspannung von 24 Volt. Der Stromversorgungsgruppe (109) ist ein Entstörgruppe (111) zur aktiven und passiven Entstörung nachgeschaltet. Ein hier nicht dargestellter Energiespeicher (102) ist beispielsweise so aufgebaut, wie im Zusammenhang mit dem vorigen Ausführungsbeispiel beschrieben.

Der Anwendungsrechner (107) hat beispielsweise drei Prozessoren. Im Ausführungsbeispiel hat ein erster Prozessor eine Taktfrequenz von 264 Megahertz, ein weiterer Prozessor eine Taktfrequenz von 1,2 Gigahertz und der dritte Prozessor eine Taktfrequenz von 1,6 Gigahertz. Hierbei wird der erstgenannte Prozessor beispielsweise für eine externe Direktsteuerung eingesetzt. Die Platine des Anwendungsrechners (107) hat z.B. Abmessungen von 30 Millimeter mal 30 Millimeter. Ihre Höhe einschließlich der Bestückung beträgt beispielsweise einen Millimeter. Der Anwendungsrechner (107) ist mit der Gruppe (42) der handhabungsseitigen Kontakte (44 - 46) fest verbunden. Beispielsweise ist von den schichtmodulelementseitigen Kontaktstiften aus das Handhabungswerkzeug (4) mittels elektrischer Leitungen bidirektional verbunden. Von einem Schichtmodul (10) aus können mehrere Handhabungswerkzeuge (4) angesteuert werden. In der Darstellung der Figur 9 ist der Anwendungsrechner (107) mit zwei Gruppen (42) elektrischer Kontakte verbunden. Am Anwendungsrechner (107) sind Leuchtdioden (112) zur Anzeige des Betriebszustandes angeschlossen.

Die an den Anwendungsrechner (107) angeschlossene nicht flüchtige Datenspeichereinheit (108) ist elektrisch gepuffert und hat eine Speicherkapazität von z.B. zweimal 16 Megabyte. Im Ausführungsbeispiel hat sie acht Pins. Ihre Abmessungen betragen beispielsweise 8 Millimeter mal 5,3 Millimeter mal 2 Millimeter.

Am Anwendungsrechner (107) ist weiterhin ein digitale Eingabe- und Ausgabeeinheit (113) angeschlossen. Diese ist im Ausführungsbeispiel elektrisch mit den in der Energie-, Daten- und Signalzufuhr (19; 21) geführten Daten- und Signalleitungen des Verbindungskabels (6) verbunden. Hiermit besteht eine digitale Verbindung zwischen dem Anwendungsrechner (107) und der Steuerung des Industrieroboters (2). Diese Verbindung verläuft über das roboterseitige Schnittstellenufer (11) des Schichtmoduls (10).

Zwischen dem Anwendungsrechner (107) und dem benutzerseitigen Schnittstellenufer (91) ist ein Umschalter (114) angeordnet. Die Abmessungen des Umschalters (114) betragen beispielsweise 9 Millimeter mal 9 Millimeter mal 1,6 Millimeter. Am benutzerseitigen Schnittstellenufer (91) sind beispielsweise Buchsen (115) für zwei Stecker angeordnet. Die Buchsen (115) sind Ufer (115) einer manuell lösbaren Steckverbindung. Mittels dieser Steckverbindungen können beispielsweise externe Daten mit hoher Datenübertragungsrate mit dem Anwendungsrechner (107) in beiden Richtungen ausgetauscht werden. Als weitere bidirektionale Benutzerschnittstelle kann ein mit dem Umschalter (114) verbundenes Funkmodul vorgesehen sein. Dieses ist beispielsweise so ausgebildet, wie im Zusammenhang mit dem ersten Ausführungsbeispiel beschrieben.

Beim Einsatz der in der Figur 9 dargestellten elektrischen Funktionsbaugruppe (100) werden die für die Positionierung des Handhabungswerkzeugs (4) erforderlichen Programme und Daten in die Steuerung des Industrieroboters (2) eingegeben. Die Daten und Programme, die für die Steuerung der Bewegungen der Wirkorgane (5) des Handhabungswerkzeugs (4) erforderlich sind, werden über das bedienerseitige Schnittstellenufer (91) dem Anwendungsrechner (107) und seiner Datenspeichereinheit (108) zugeführt. Dies kann drahtgebunden über die Buchsen (115) oder drahtlos über das Funkmodul erfolgen. Der Anwendungsrechner (107) kommuniziert mittels digitaler Daten mit der Steuerung des Industrieroboters (2), z.B. zur Feinregelung der Positionierung zum Greifen eines Werkstücks. Die Steuerung der Wirkorgane (5) des Handhabungswerkzeugs (4) erfolgt mittels des Anwendungsrechners (107). Diese Steuerung erfolgt beispielsweise sowohl abhängig vom Aufbau des Handhabungswerkzeugs (4) als auch abhängig von der Geometrie und dem Aufbau des zu greifenden Werkstücks.

Soll ein anderes Werkstück gegriffen werden, kann beispielsweise ein anderes Greifprofil am Anwendungsrechner (107) eingesetzt werden. Somit können auch Werkstücke der Losgröße eins problemlos und unterbrechungsfrei aufgenommen werden. Hierbei wird die Steuerung des Industrieroboters (2) nur bei einer Änderung der Positionierung des Handhabungswerkzeugs (4) beim Greifen angepasst. Die werkstückspezifische Steuerung der Wirkorgane (5) des Handhabungswerkzeugs (4) erfolgt allein mittels des Anwendungsrechners (107).

Beim Einsatz eines anderen Handhabungswerkzeugs (4) werden die werkzeugspezifischen Programme an den Anwendungsrechner (107) über die Benutzerschnittstelle zugeführt. Auch in diesem Fall erfolgt der Soll-Ist-Abgleich bei der Positionierung des Handhabungswerkzeugs (4) digital über die Festverdrahtung zwischen dem Anwendungsrechner (107) und der Steuerung des Industrieroboters (2). Die werkstück- und/oder werkzeugspezifischen Programme zur Steuerung und Regelung der Greifelemente des Handhabungswerkzeugs können damit weitgehend unabhängig von der Programmierung des Industrieroboters (2) erstellt und eingesetzt werden. Beispielsweise kann eine handhabungswerkzeugspezifische Programmiersprache eingesetzt werden.

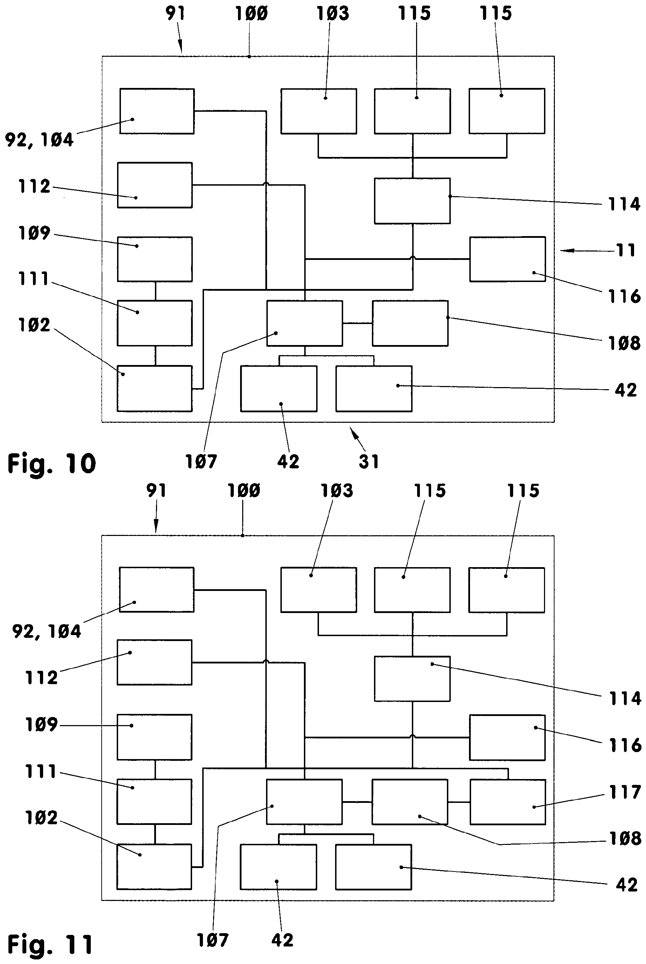

Die Figur 10 zeigt eine erweiterte Variante der in der Figur 9 dargestellten elektrischen Funktionsbaugruppe (100). Der Anwendungsrechner (107), die Datenspeichereinheit (108) und der Umschalter (114) sind mitsamt den angeschlossenen Bauteilen so ausgebildet, wie im Zusammenhang mit dem vorherigen Ausführungsbeispiel beschrieben. Die Stromversorgungsgruppe (109) ist gepuffert, sodass Rückwirkungen von Stromspitzen, die z.B. beim Beschleunigen der Greifelemente (5) entstehen, vermindert werden. An den Umschalter (114) ist ein zusätzliches Funkmodul (103) angeschlossen. Dieses arbeitet bidirektional beispielsweise im Bereich von 2,4 Gigahertz oder 5 Gigahertz. In diesem Ausführungsbeispiel können die handhabungsspezifischen Programme auch auf einem externen Rechner installiert sein. Während des Betriebs des Handhabungsrobotersystems (1) erfolgt die Kommunikation zwischen dem Anwendungsrechner (107) und dem externen Rechner z.B. über das Funkmodul (103). Außerhalb der Hauptzeit des Handhabungsrobotersystems (1) kann die Kommunikation zwischen einem externen Rechner und dem Anwendungsrechner (107) auch über die Ufer (115) der Steckverbindung am bedienerseitigen Schnittstellenufer (91) erfolgen.

Weiterhin ist ein Schaltelement (104) vorgesehen. Dieses ist beispielsweise Teil der Schaltgruppe (92, 104). Diese ist vom Bediener mittels des Schalters (92) betätigbar. Damit kann z.B. manuell zwischen verschiedenen Betriebsmodi des Anwendungsrechners (107) umgeschaltet werden. Die Schnittstelle zwischen dem Anwendungsrechner (107) und der Steuerung des Industrieroboters (2) kann wie oben beschrieben ausgebildet sein. Sie kann jedoch auch als Feldbus (116) ausgeführt sein. Die Datenschnittstelle kann beispielsweise auch als asynchrone, serielle Datenschnittstelle, z.B. als RS 485, ausgebildet.

In diesem Ausführungsbeispiel können auch ein Anwendungsrechner (107) und eine Datenspeichereinheit (108) höherer Kapazität eingesetzt werden. Damit kann z.B. im Anwendungsrechner (107) ein Betriebssystem und/oder eine speicherprogrammierbare Steuerung installiert sein. Das Betriebssystem ist beispielsweise ein Echtzeit-Betriebssystem. Die Programmierung der speicherprogrammierbaren Steuerung erfolgt beispielsweise über das bedienerseitige Schnittstellenufer (91). Die speicherprogrammierbare Steuerung kann mehrere Handhabungswerkzeuge (4) steuern. Außerdem werden im Anwendungsrechner (107) und/oder in der Datenspeichereinheit (108) Prozessdaten, Ereignisdaten und Wartungsdaten gesammelt. Diese Daten können dann z.B. über das bedienerseitige Schnittstellenufer (91) ausgelesen werden.

In der Figur 11 ist ein Blockbild einer weiteren Variante der elektrischen Funktionsbaugruppe (100) dargestellt. Diese elektrische Funktionsbaugruppe (100) hat, aufbauend auf die Variante der Figur 10, ein zusätzliches Lernmodul (117). Die während der Bearbeitung ermittelten werkzeugspezifischen und werkstückspezifischen Daten werden verdichtet. Hierbei wird beispielsweise der Mittelwert aus mehreren Ist-Daten gebildet.

Dies können z.B. Energiedaten, von Sensoren ermittelte Daten, wiederholte Korrekturdaten, etc. sein. Beispielsweise erfolgt die Datenverdichtung jeweils für eine Kombination eines Handhabungswerkzeugs (4) und eines Werkstücks. Diese Ergebnisse fließen in die vom Anwendungsrechner (107) bereitgestellten Soll-Daten ein. Beim wiederholten Einsatz der Kombination aus Handhabungswerkzeug (4) und Werkstück ist die elektrische Funktionsbaugruppe (100) damit selbstlernend.

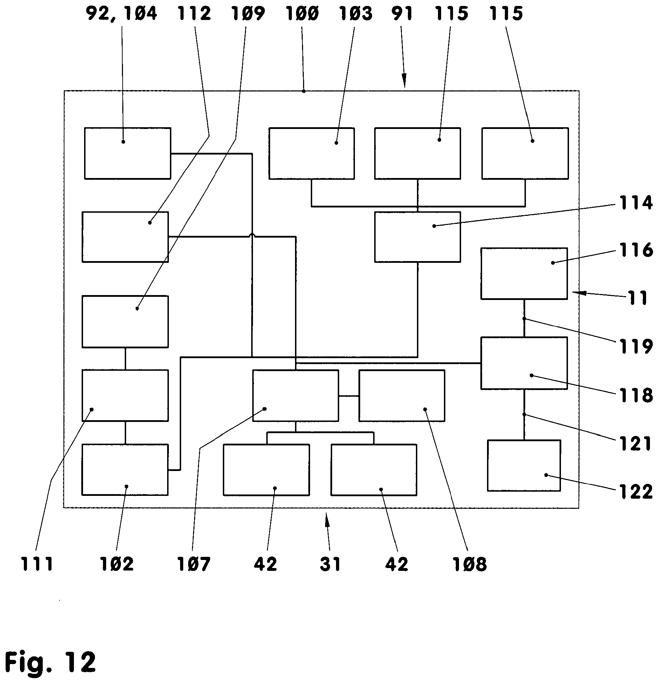

Die Figur 12 zeigt das Blockbild einer elektrischen Funktionsbaugruppe (100), die ebenfalls auf der Variante der Figur 10 aufbaut. Die in der Figur 12 dargestellte Variante hat ein zusätzliches Sicherheitsmodul (118). Dieses hat beispielsweise zwei, jeweils redundant ausgebildete Anschlüsse (119, 121). Weiterhin besteht eine Verbindung zum Anwendungsrechner (107). Einer der Anschüsse (121) ist mit einem Aktor (122) der Wirkorgane (5) des Handhabungswerkzeugs (4) verbunden. Der andere Anschluss (119) ist am Feldbus (116) angeschlossen. Beim Auftreten einer äußeren Störung, z.B. beim Öffnen eines Schutzgitters, werden mittels der übergeordneten Steuerung und des Sicherheitsmoduls (118) die Wirkorgane (5) des Handhabungswerkzeugs (4) kraftfrei oder kraftreduziert geschaltet. Dies kann beispielsweise durch Vermindern oder Abschalten der über die handhabungsseitige Schnittstelle (31) übertragenden Energie erfolgen. Auch ist es denkbar, über die handhabungsseitige Schnittstelle (31) dem Handhabungswerkzeug (4) ein Signal zur Kraftreduzierung oder zum Kraftlosschalten der Wirkorgane (5) zu übermitteln. Beispielsweise bei einem Formschluss der Wirkorgane (5) mit einer aufgenommenen Last kann auch bei kraftfreien Wirkorganen (5) ein sicheres Halten gewährleistet sein.

Es ist auch denkbar, das Sicherheitsmodul (118) mit einem am Handhabungswerkzeug (4) angeordneten Sensor zu verbinden. Dieser Sensor kann ein induktiver oder kapazitiver Näherungsschalter, eine Lichtschranke, etc. sein. Beispielsweise bei einer drohenden Kollision wird der Näherungsschalter bedämpft oder die Lichtschranke unterbrochen. Beim Schalten des Sensors wird im Sicherheitsmodul (118) ein Alarmsignal erzeugt, das über das handhabungsseitige Schnittstellenufer (11) an die Steuerung des Industrieroboters geleitet wird. Das Handhabungswerkzeug (4) kann nun mittels des Industrieroboters (2) z.B. aus dem Gefahrenbereich heraus verfahren werden.

### Bezugszeichenliste:

- 1: Handhabungsrobotersystem
- 2: Industrieroboter
- 3: Arm von (2)
- 4: Handhabungswerkzeug, Greifeinheit
- 5: Wirkorgan von (4), Greifbacke
- 6: Kabel, Energie-, Daten- und Signalleitung

- 10: Schichtmodul, Kopplungspartner
- 11: roboterseitiges Schnittstellenufer
- 12: Stirnseite, roboterseitig
- 13: geometrische Anschlusskontur
- 14: Zentrierring
- 15: Zentrierbolzenaufnahme
- 16: Bohrbild
- 17: Durchgangsbohrungen
- 18: Verschlussdeckel
- 19: Kabelzuführung, Energie-, Signal- und Datenzuführung, stirnseitig

- 21: Kabelzuführung, Energie-, Signal- und Datenzuführung, mantelseitig
- 22: Zugentlastung

- 31: handhabungsseitiges Schnittstellenufer
- 32: Stirnseite, handhabungsseitig
- 33: Führungselementaufnahme
- 34: Führungselementaufnahme
- 35: Rand
- 36: Innenwandung von (35), Radialzentrierring
- 37: Stirnfläche von (35)
- 38: Umgriffsränder
- 39: Oberseite von (38)
- 41: Unterseite von (38)
- 42: Gruppe elektrischer Kontakte
- 43: Kontaktflächen
- 44: elektrische Energiekontakte
- 45: Signalkontakte
- 46: Datenkontakte
- 47: Schnappelementaufnahme
- 48: Einlaufschräge
- 49: Zylindrischer Aufnahmebereich

- 51: Mantelfläche
- 52: Innenraum
- 53: Medienanschlüsse
- 54: Medienanschlüsse
- 55: Medienleitung
- 56: Medienleitung
- 57: Anschluss
- 58: Dichtelement

- 61: Gehäuse
- 62: Grundkörper
- 63: Deckel
- 64: Zentralbereich
- 65: Längsachse
- 66: Boden
- 67: Wandbereiche
- 68: Einsenkungen
- 69: Senkbohrungen

- 71: Zentrierbohrungen
- 72: Begrenzungsflächen

- 81: Einsatzstücke
- 82: Befestigungsschrauben
- 83: geometrische Anschlusskontur von (31)

- 91: drittes Schnittstellenufer, bedienerseitiges Schnittstellenufer
- 92: Schalter, Teil eines Schaltgruppe, Teil eines Multifunktionstasters

- 100: elektrische Funktionsbaugruppe
- 101: Platine
- 102: Energiespeicher
- 103: Funkmodul
- 104: Schaltelement, Teil einer Schaltgruppe, Teil eines Multifunktionstasters
- 105: Anschlussblock
- 106: NPN-PNP-Logik-Umwandler
- 107: Anwendungsrechner
- 108: Datenspeichereinheit
- 109: Stromversorgungsgruppe

- 111: Entstörgruppe
- 112: Leuchtdioden
- 113: digitale Eingabe- und Ausgabeeinheit
- 114: Umschalter
- 115: Buchsen, Ufer einer Steckverbindung
- 116: roboterseitige Datenschnittstelle, Feldbus
- 117: Lernmodul
- 118: Sicherheitsmodul
- 119: Anschluss von (118)

- 121: Anschluss von (118)
- 122: Aktor

- 200: Schichtmodulelement, Kopplungspartner
- 201: Schnittstellenuferseite
- 202: Führungselement
- 203: Führungselement
- 204: Führungsbund
- 205: Längsachse von (200)
- 206: Körper von (200)
- 207: Ringbund

- 211: Verriegelungsteil
- 212: Verriegelungsteil
- 213: Führungslangloch
- 214: Griffbereich
- 215: Haken
- 216: Hakenoberseite
- 217: Hakenunterseite

- 221: Federelemente

- 231: Fügerichtung

## Patentansprüche

1. Schichtmodul (10) zur Einbindung in ein Handhabungsrobotersystem (1), mit einem roboterseitigen Schnittstellenufer (11), mit einem handhabungsseitigen Schnittstellenufer (31) und mit einem dritten Schnittstellenufer (91),
- wobei das roboterseitige Schnittstellenufer (11) eine geometrische Anschlusskontur (13) zum lagezentrierten Befestigen an einem Industrieroboter (2) des Handhabungsrobotersystems (1) oder an einem Roboteradapterteil sowie eine Kabelzuführung (19; 21) zur Aufnahme einer Festverdrahtung einer im Schichtmodul (10) angeordneten elektrischen Funktionsbaugruppe (100) mit dem Industrieroboter (2) aufweist,
- wobei das handhabungsseitige Schnittstellenufer (31) eine geometrische Anschlusskontur (83) zum lagezentrierten lösbaren Fügen mittels einer Schnappverbindung mit einem Handhabungswerkzeug (4) oder mit einem dem Handhabungswerkzeug (4) vorgeschalteten Schichtmodulelement (200) sowie eine Gruppe (42) elektrischer Energiekontakte (44), Signalkontakte (45) und Datenkontakte (46) aufweist,
- wobei die elektrische Funktionsbaugruppe (100) handhabungsseitig mit den elektrischen Energiekontakten (44), Signalkontakten (45) und Datenkontakten (46) elektrisch verbunden ist,
- **dadurch gekennzeichnet, dass** die elektrische Funktionsbaugruppe (100) zumindest einen Energiespeicher (102) und das dritte Schnittstellenufer (91) umfasst und
- dass das dritte Schnittstellenufer (91) Teil einer Bedienerschnittstelle zur temporären Steuerung der über das handhabungsseitige Schnittstellenufer (31) übertragbaren Signale und/oder Daten ist, wobei das dritte Schnittstellenufer (91) zumindest eine manuell betätigbaren Schaltgruppe (92, 104) oder ein Ufer (115) einer manuell füg- und trennbaren Steckerverbindung aufweist.

2. Schichtmodul (10) nach Anspruch 1, **dadurch gekennzeichnet, dass** mindestens eine Medienleitung (55; 56) sowohl das roboterseitige Schnittstellenufer (11) als auch das handhabungsseitige Schnittstellenufer (31) durchdringt.

3. Schichtmodul (10) nach Anspruch 1, **dadurch gekennzeichnet, dass** die Kabelzuführung (19) eine roboterseitige Stirnseite (12) des Schichtmoduls (10) durchdringt.

4. Schichtmodul (10) nach Anspruch 1, **dadurch gekennzeichnet, dass** die elektrische Funktionsbaugruppe (100) einen mittels der manuell betätigbaren Schaltgruppe (92, 104) umschaltbaren Logik-Pegel-Umsetzer (106) aufweist.

5. Schichtmodul (10) nach Anspruch 1, **dadurch gekennzeichnet**, das die elektrische Funktionsbaugruppe (100) einen Anwendungsrechner (107) und eine Datenspeichereinheit (108) umfasst.

6. Schichtmodul (10) nach Anspruch 5, **dadurch gekennzeichnet, dass** die elektrische Funktionsbaugruppe (100) zwischen dem Anwendungsrechner (107) und dem roboterseitigen Schnittstellenufer (11) eine roboterseitige Datenschnittstelle (116) in Form eines Feldbusses (116) oder einer asynchronen seriellen Datenschnittstelle aufweist.

7. Schichtmodul (10) nach Anspruch 5, **dadurch gekennzeichnet, dass** der Anwendungsrechner (107) ein Betriebssystem und/oder eine speicherprogrammierbare Steuerung umfasst.

8. Schichtmodul (10) nach Anspruch 5, **dadurch gekennzeichnet, dass** die elektrische Funktionsbaugruppe (100) ein Lernmodul (117) aufweist, das dem Schichtmodul (10) über die elektrischen Datenkontakte (46) und Signalkontakte (45) zugeführte anwendungsspezifische Ist-Daten und Ist-Signale verdichtet und dem Anwendungsrechner (107) zur Ermittlung neuer Soll-Daten zuführt.

9. Schichtmodul (10) nach Anspruch 6, **dadurch gekennzeichnet, dass** die elektronische Funktionsbaugruppe (100) ein Sicherheitsmodul (118) aufweist, das über das roboterseitige Schnittstellenufer (11) an das Schichtmodul (10) übertragene Daten und Signale auswertet und signalabhängig die über die Energiekontakte (44) übertragene Energie vermindert oder über die Signalkontakte (45) ein Änderungssignal für ein Handhabungswerkzeug (4) zur Kraftreduzierung ausgibt.

10. Handhabungsrobotersystem (1) mit einem Schichtmodul (10) nach Anspruch 1 und einem mindestens einen Arm (3) aufweisenden Industrieroboter (2),
- wobei das Schichtmodul (10) am Arm (3) des Industrieroboters (2) oder an einem am Arm (3) des Industrieroboters (2) befestigten Roboteradapterteil befestigt ist und elektrisch mit dem Industrieroboter (2) festverdrahtet verbunden ist und
- wobei am Schichtmodul (10) ein Schichtmodulelement (200) mit daran befestigtem Handhabungswerkzeug (4) mittels einer lösbaren Schnappverbindung fixiert ist oder wobei ein Handhabungswerkzeug (4) mittels einer lösbaren Schnappverbindung am Schichtmodul (10) fixiert ist.

## Claims

1. A layer module (10) for incorporation in a handling robot system (1), with a robot-side interface bank (11), with a handling-side interface bank (31) and with a third interface bank (91),
- wherein the robot-side interface bank (11) has a geometrical terminal contour (13) for the location-centred fastening to an industrial robot (2) of the handling robot system (1) or to a robot adapter part and a cable feed (19; 21) for receiving hardwiring of an electrical functional assembly (100) arranged in the layer module (10) with the industrial robot (2),
- wherein the handling-side interface bank (31) has a geometrical terminal contour (83) for the location-centred detachable jointing by means of a snap-in connection with a handling tool (4) or with a layer module element (200) upstream of the handling tool (4) and a group (42) of electrical energy contacts (44), signal contacts (45) and data contacts (46),
- wherein the electrical functional assembly (100) is electrically connected at the handling side to the electrical energy contacts (44), signal contacts (45) and data contacts (46),
- **characterised in that** the electrical functional assembly (100) comprises at least one energy store (102) and the third interface bank (91) and
- that the third interface bank (91) is part of a user interface for the temporary control of the signals and/or data transferable via the handling-side interface bank (31), wherein the third interface bank (91) comprises at least one manually actuatable switch group (92, 104) or a bank (115) of a manually joinable and separable plug connection.

2. The layer module (10) according to claim 1, **characterised in that** at least one media line (55; 56) runs through both the robot-side interface bank (11) and also the handling-side interface bank (31).

3. The layer module (10) according to claim 1, **characterised in that** the cable feed (19) passes through a robot-side front face (12) of the layer module (10).

4. The layer module (10) according to claim 1, **characterised in that** electrical functional assembly (100) comprises a logic level shifter (106) which can be switched by means of the manually actuatable switch group (92, 104).

5. The layer module (10) according to claim 1, **characterised in that** the electrical functional assembly (100) comprises an application computer (107) and a data memory unit (108).

6. The layer module (10) according to claim 5, **characterised in that** the electrical functional assembly (100) comprises a robot-side data interface (116) in the form of a field bus (116) or an asynchronous serial data interface between the application computer (107) and the robot-side interface bank (11).

7. The layer module (10) according to claim 5, **characterised in that** the application computer (107) comprises an operating system and/or a memory-programmable control.

8. The layer module (10) according to claim 5, **characterised in that** the electrical functional assembly (100) comprises a learning module (117), which condenses application-specific actual data and actual signals fed via electrical data contacts (46) and signal contacts (45) to the layer module (10) and feeds the latter to the application computer (107) for the determination of new setpoint data.

9. The layer module (10) according to claim 6, **characterised in that** the electronic functional assembly (100) comprises a safety module (118) which evaluates data and signals transmitted via the robot-side interface bank (11) to the layer module (10) and, depending on the signals, reduces the energy transmitted via the energy contacts (44) or emits a change signal via the signal contacts (45) for a handling tool (4) for force reduction.

10. A handling robot system (1) with a layer module (10) according to claim 1 and an industrial robot (2) comprising at least one arm (3),
- wherein the layer module (10) is fastened to the arm (3) of the industrial robot (2) or to a robot adapter part fastened to the arm (3) of the industrial robot (2) and is connected hardwired electrically to the industrial robot (2) and
- wherein a layer module element (200) with a handling tool (4) fastened thereto is fixed to the layer module (10) by means of a detachable snap-in connection or wherein a handling tool (4) is fixed by means of a detachable snap-in connection to the layer module (10).

## Revendications

1. Module en couche (10) pour intégration dans un système robotisé de manutention (1), avec une face d'interface (11) côté robot, avec une face d'interface (31) côté manutention et avec une troisième face d'interface (91),
- sachant que la face d'interface (11) du côté robot comporte un profil de raccordement géométrique (13) pour fixation centrée en position sur un robot industriel (2) du système robotisé de manutention (1) ou sur une partie d'adaptateur de robot ainsi qu'un conduit d'arrivée de câble (19, 21) pour loger un câblage fixe d'un ensemble fonctionnel électrique (100) disposé dans le module en couche (10) avec le robot industriel (2),
- sachant que la face d'interface (31) du côté manutention comporte un profil de raccordement géométrique (83) pour l'assemblage centré en position amovible au moyen d'un raccord par encliquetage avec un outil de manutention (4) ou avec un élément de module en couche (200) monté en amont de l'outil de manutention (4) ainsi qu'un groupe (42) de contacts d'énergie électriques (44), de contacts de signalisation (45) et de contacts de données (46),
- sachant que l'ensemble fonctionnel électrique (100) est relié électriquement du côté manutention aux contacts d'énergie électriques (44), aux contacts de signalisation (45) et aux contacts de données (46),
- **caractérisé en ce que** l'ensemble fonctionnel électrique (100) comprend au moins un accumulateur d'énergie (102) et la troisième face d'interface (91), et
- la troisième face d'interface (91) fait partie d'une interface d'utilisateur pour la commande temporaire des signaux et/ou données transmissibles par le biais de la face d'interface (31) du côté manutention, sachant que la troisième face d'interface (91) comporte au moins un groupe de connexion à commande manuelle (92, 104) ou une face (115) d'un connecteur pouvant être mis ou séparé à la main.

2. Module en couche (10) selon la revendication 1, **caractérisé en ce que** au moins un conduit de milieu (55, 56) traverse aussi bien la face d'interface (11) côté robot que la face d'interface (31) du côté manutention.

3. Module en couche (10) selon la revendication 1, **caractérisé en ce que** le conduit d'arrivée de câble (19) traverse une face avant (12) du côté robot du module en couche (10).

4. Module en couche (10) selon la revendication 1, **caractérisé en ce que** l'ensemble fonctionnel électrique (100) comporte un convertisseur logique-niveau (106) réversible au moyen d'un groupe de connexion à commande manuelle (92, 104).

5. Module en couche (10) selon la revendication 1, **caractérisé en ce que** l'ensemble fonctionnel électrique (100) comprend un ordinateur d'application (107) et une unité de mémorisation de données (108).

6. Module en couche (10) selon la revendication 5, **caractérisé en ce que** l'ensemble fonctionnel électrique (100) comporte une interface de données (116) du côté robot entre l'ordinateur d'application (107) et la face d'interface (11) du côté robot sous la forme d'un bus de terrain (116) ou d'une interface de données de série asynchrone.

7. Module en couche (10) selon la revendication 5, **caractérisé en ce que** l'ordinateur d'application (107) comprend un système d'exploitation et/ou une automate programmable.

8. Module en couche (10) selon la revendication 5, **caractérisé en ce que** l'ensemble fonctionnel électrique (100) comporte un module d'apprentissage (117), qui condense les données réelles et les signaux réels spécifiques à l'application dirigés au module en couche (10) par les contacts de données électriques (46) et les contacts de signalisation (45) et alimente l'ordinateur d'application (107) pour déterminer de nouvelles données théoriques.

9. Module en couche (10) selon la revendication 6, **caractérisé en ce que** l'ensemble fonctionnel électronique (100) comporte un module de sécurité (118), qui évalue les données et signaux transmis par le biais de la face d'interface (11) au module en couche (10) et réduit en fonction du signal l'énergie transmise par les contacts d'énergie (44) ou émet un signal de modification pour un outil de manutention (4) pour la réduction de force par le biais des contacts de signalisation (45).

10. Système robotisé de manutention (1) avec un module en couche (10) selon la revendication 1 et un robot industriel (2) comportant au moins un bras (3),
- sachant que le module en couche (10) est fixé sur le bras (3) du robot industriel (2) ou sur une partie d'adaptateur de robot fixée sur le bras (3) du robot industriel (2) et est relié par câblage fixe électriquement au robot industriel (2), et
- sachant qu'un élément de module en couche (200) est fixé au module en couche (10) avec un outil de manutention (4) fixé à celui-ci au moyen d'un raccord par encliquetage amovible ou sachant qu'un outil de manutention (4) est fixé au module en couche (10) au moyen d'un raccord par encliquetage amovible.
